# EUROPÄISCHE PATENTSCHRIFT

(11) **EP 3 312 446 B1**
(45) Veröffentlichungstag und Bekanntmachung des Hinweises auf die Patenterteilung: **16.12.2020**
(21) Anmeldenummer: 17196976.9
(22) Anmeldetag: 18.10.2017
(51) Int. Cl.: F16D 23/06, F16D 23/02

(54) **SYNCHRONISIERUNGSEINHEIT FÜR EIN SCHALTGETRIEBE SOWIE SCHALTGETRIEBE**
SYNCHRONIZING UNIT FOR A GEARBOX AND GEARBOX
UNITÉ DE SYNCHRONISATION POUR UNE BOÎTE DE VITESSES AINSI QUE BOÎTE DE VITESSES

(30) Priorität: 20.10.2016 DE 102016120007
(43) Veröffentlichungstag der Anmeldung: 25.04.2018
(73) Patentinhaber: HOERBIGER Antriebstechnik Holding GmbH, 86956 Schongau (DE)
(72) Erfinder: Kölzer, Michael, 87672 Rosshaupten (DE); Binder, Jürgen, 86956 Schongau (DE); Echtler, Peter, 86956 Schongau (DE); Völk, Wolfgang, 86978 Hohenfurch (DE)
(74) Vertreter: Prinz & Partner mbB

(56) Entgegenhaltungen:
- DE-A1- 2 331 053
- DE-A1- 3 225 201
- DE-A1-102008 054 665
- DE-B3-102006 023 098

## Beschreibung

Die Erfindung betrifft eine Synchronisierungseinheit für ein Schaltgetriebe eines Kraftfahrzeugs sowie ein Schaltgetriebe mit einer solchen Synchronisierungseinheit.

Bei modernen Schaltgetrieben, wie sie insbesondere in Kraftfahrzeugen verwendet werden, ist jede Gangstufe gebildet durch zwei miteinander in Eingriff stehende Zahnräder. Eines der Zahnräder ist auf einer Getriebewelle drehfest angeordnet, und das andere Zahnrad ist als sogenanntes Losrad drehbar auf der zweiten Getriebewelle angeordnet. Mit dieser Getriebewelle kann das Losrad dann drehfest verbunden werden, wenn der entsprechende Gang eingelegt wird.

Die Synchronisierungseinheit dient dabei dazu, beim Einlegen des Ganges die Drehzahl des Losrades an die Drehzahl der Getriebewelle anzugleichen, mit der es drehfest gekoppelt werden soll.

Unabhängig von der jeweiligen konkreten Ausgestaltung der Synchronisierungseinheit besteht der Synchronisierungsvorgang üblicherweise darin, dass, wenn die Schiebemuffe aus einer Neutralstellung heraus verstellt wird, um einen Gang zu schalten, zunächst in einer sogenannten Vorsynchronphase ein Synchronring gegen eine ihm zugeordnete Reibfläche beaufschlagt wird. Der Synchronring dreht sich zusammen mit einer Nabe, auf der die Schiebemuffe aufgenommen ist, und die Reibfläche ist drehfest mit dem zu schaltenden Gangrad verbunden. Das Reibmoment sorgt dafür, dass die Drehzahl des Gangrades an die Drehzahl des Synchronrings und damit an die Drehzahl der Nabe und auch der Getriebewelle angeglichen wird.

Wenn die Drehzahlen von Gangrad und Getriebewelle angeglichen sind, kann die Schiebemuffe durchgeschaltet werden, sodass das Gangrad über die Schiebemuffe und die Nabe drehfest mit der Getriebewelle gekoppelt ist.

Ein Beispiel einer solchen Synchronisierungseinheit ist als "Borg-Warner-Synchronisierung" bekannt.

Die DE 23 31 053 A1 zeigt eine Synchronisierungseinheit für ein Schaltgetriebe, die eine mit einer Getriebewelle drehfest verbundenen Nabe mit einer Außenverzahnung sowie eine Schiebemuffe mit einer Innenverzahnung umfasst. Die Schiebemuffe ist auf der Nabe in axialer Richtung verschiebbar und in Umfangsrichtung drehfest mit der Nabe gekoppelt. Die Synchronisierungseinheit hat ferner als Reibkegelkupplung wirkende Synchronringe sowie jeweils eine den Synchronringen zugeordnete Anlasservorrichtung, die aus einem aufgespaltenen Ring und einem Korb besteht. Die aufgespaltenen Ringe sind in konischen Nuten angeordnet, die an den zwei Seiten der Schiebmuffe aus der Innenverzahnung ausgearbeitet sind. Der aufgespaltene Ring wird hierbei in axialer Richtung durch den Korb gelagert.

Die Aufgabe der Erfindung besteht darin, eine Synchronisierungseinheit zu schaffen, die sich durch einen sehr geringen Einbauraum auszeichnet, insbesondere in axialer Richtung.

Zur Lösung dieser Aufgabe ist erfindungsgemäß eine Synchronisierungseinheit für ein Schaltgetriebe insbesondere eines Kraftfahrzeugs vorgesehen, mit einer Nabe, die drehfest mit einer Getriebewelle verbunden werden kann und eine umfangsmäßig durchgängige Außenverzahnung aufweist, einer Schiebemuffe, die auf der Außenverzahnung der Nabe in axialer Richtung verschiebbar, aber in Umfangsrichtung drehfest gekoppelt aufgenommen ist, mindestens einem Synchronring, der eine vorzugsweise konusförmige Reibfläche zur Reibkopplung des Synchronrings mit einem Gangrad des Schaltgetriebes aufweist und von der Schiebemuffe betätigbar ist, und einen Federring, der an einer axialen Seite der Außenverzahnung der Nabe angeordnet und dazu eingerichtet ist, die Schiebemuffe in einer Neutralstellung zu arretieren, wobei der Federring an einer Stirnseite der Schiebemuffe anliegt und wirkungsmäßig zwischen der Schiebemuffe und dem Synchronring angeordnet ist. Der Federring dient dabei als Vorsynchronelement ähnlich wie Druckstücke, die bei bekannten Synchronisierungseinheiten dazu dienen, eine axiale Bewegung der Schiebemuffe auf den Synchronring zu übertragen und diesen gegen die ihm zugeordnete Reibfläche zu drücken. Da der Federring aber im Bereich der Stirnseite der Schiebemuffe liegt, ist es möglich, die Außenverzahnung der Nabe in Umfangsrichtung durchgehend auszuführen. Dies erhöht die Festigkeit der Nabe und das Vermögen der Außenverzahnung, ein Drehmoment übertragen zu können. Daher kann die Nabe axial kompakter ausgeführt werden.

Unter dem Begriff "Stirnseite der Schiebemuffe" wird hier eine in axiale Richtung weisende Fläche verstanden. Es muss sich hier nicht notwendigerweise um eine der Flächen handeln, die in axialer Richtung am weitesten außen liegend ist. Es muss sich auch nicht um eine Fläche handeln, die senkrecht zur Mittelachse der Schiebemuffe und damit zur Mittelachse einer der Getriebewellen ausgerichtet ist.

Die erfindungsgemäße Synchronisiereinheit kann mit einem einzigen Synchronringje Gangrad verwendet werden. Wenn bei der Synchronisierung höhere Drehmomente übertragen werden sollen, können auch mehrflächige Synchronring-Baugruppen verwendet werden, wie sie grundsätzlich aus dem Stand der Technik bekannt sind.

Vorzugsweise ist vorgesehen, dass der Federring ein umgeformter Blechring ist. Dies ermöglicht es, die gewünschten Federeigenschaften bei sehr geringen Abmessungen in axialer Richtung zu realisieren. Insbesondere lassen sich sehr viel geringere Abmessungen realisieren, als dies mit einem Federring aus Draht möglich ist.

Der Federring ist vorzugsweise umfangsmäßig unterbrochen, damit er in radialer Richtung federnd ist. Außerdem erleichtert dies die Montage.

Gemäß einer Ausgestaltung der Erfindung ist vorgesehen, dass der Federring in der Neutralstellung der Schiebemuffe an einer Innenverzahnung der Schiebemuffe anliegt, vorzugsweise an einer Vorsynchronfase der Innenverzahnung. Auf diese Weise ist gewährleistet, dass der Federring den Eingriff zwischen der Schiebemuffe und den Sperrzähnen des Synchronrings nicht beeinträchtigt. Der Federring kann dabei ähnlich wie ein Druckstück als Vorsynchronelement dienen.

Gemäß einer Ausgestaltung der Erfindung ist vorgesehen, dass die Innenverzahnung der Schiebemuffe umfangsmäßig durchgängig ist. Auch dies steigert das Vermögen, ein Drehmoment von der Nabe auf die Schiebemuffe zu übertragen.

Gemäß einer Ausgestaltung der Erfindung weist der Federring mehrere Führungsabsätze auf, mittels denen er in axialer Richtung und in Umfangsrichtung an der Nabe geführt ist. Die Führungsabsätze, die beispielsweise als umlaufender, umgeformter Führungsbund oder als sich axial erstreckende Führungslaschen ausgebildet sind, verhindern, dass sich der Federring unter der Wirkung von Fliehkräften in unerwünschter Weise radial aufdehnt.

Vorzugsweise umfasst der Federring zwei oder mehr sich im Wesentlichen axial erstreckende Federlaschen, die in eine in der Nabe vorgesehene Ausnehmung eingreifen. Die Federlaschen verhindern, dass sich der Federring relativ zur Nabe in unerwünschter Weise verdreht.

Die Federlaschen können einen radial nach außen geknickten oder gebogenen Abschnitt umfassen, mit dem der Federring in axialer Richtung mit der Nabe gekoppelt werden kann.

Vorzugsweise liegt die Federlasche in der Neutralstellung an einer Federringhaltefläche der Nabe an, wobei die Federringhaltefläche vorzugsweise an einer radial außenliegenden Seitenfläche der Ausnehmung angeordnet ist und/oder vorzugsweise bezüglich einer Axialebene der Nabe schräg verläuft. Bei dieser Ausgestaltung dient die Federlasche auch dazu, den Federring in axialer Richtung in seiner Ausgangsstellung zu beaufschlagen, in der er an der Stirnseite der Nabe anliegt.

Die Federringhaltefläche kann in axialer Richtung von der Federlasche hintergriffen sein, sodass eine gute axiale Kopplung gewährleistet ist.

Gemäß einer bevorzugten Ausführungsform der Erfindung sind zwei Federringe vorgesehen, die auf einander axial entgegengesetzten Seiten der Nabe angeordnet sind. Hierdurch ergibt sich ein symmetrischer Aufbau bei einer Synchronisierungseinheit, mit der zwei Gangräder synchronisiert werden.

Die Federringe können relativ zueinander versetzt angeordnet sein, sodass sie einander nicht berühren. Es gibt daher keine Rückwirkung vom Federring einer Seite auf den Federring der anderen Seite.

Alternativ kann vorgesehen sein, dass die Federlaschen der auf einander axial entgegengesetzten Seiten angeordneten Federringe paarweise radial aneinander anliegen. Bei dieser Ausgestaltung ist die aus den beiden Federringen gebildete Baugruppe gemeinsam relativ zur Nabe fixiert.

Dabei ist insbesondere vorgesehen, dass sich die paarweise aneinander anliegenden Federringe in axialer Richtung hintergreifen. Hierdurch ergibt sich eine sehr einfache Montage, da die beiden Federringe automatisch aneinander einrasten.

Gemäß einer Ausführungsform der Erfindung ist vorgesehen, dass der Synchronring mit Indexnocken versehen ist, die radial innerhalb der Außenkontur angeordnet sind. Dies gewährleistet eine in Umfangsrichtung vollständig geschlossene Verzahnung der Nabe.

Gemäß einer Ausgestaltung der Erfindung ist vorgesehen, dass die Nabe mindestens eine weitere Aussparung zur Aufnahme der Indexnocken aufweist, sodass diese in Umfangsrichtung präzise relativ zur Nabe geführt sind.

Gemäß einer bevorzugten Ausführungsform der Erfindung ist eine Synchron-Baugruppe mit einem Synchronring und einem Zusatzsynchronring vorgesehen, wobei der Synchronring mit mindestens einem Indexnocken versehen ist, der eine Ausnehmung aufweist, in der ein Koppelfortsatz aufgenommen ist, der am Zusatzsynchronring angebracht ist. Hierdurch wird die Größe der Reibflächen erhöht, die zur Übertragung eines Drehmoments zwischen Nabe und Koppelring zur Verfügung steht.

Vorzugsweise ist dabei der Zusatzsynchronring mit mindestens einem Koppelnocken versehen, der in eine Tasche eingreift, die an der Nabe vorgesehen ist. Hierdurch kann in der Vorsynchronphase ein Drehmoment unmittelbar vom Zusatzsynchronring in die Nabe übertragen werden, ohne dass der Synchronring beaufschlagt wird. Dieser kann sich daher optimal in die Sperrstellung verdrehen, in der er ein Durchschalten der Schiebemuffe verhindert.

Die Ausnehmung, in die der Indexnocken eingreift, kann als geschlossene, taschenartige Aussparung ausgeführt sein, so dass die Festigkeit der Ausnehmung erhöht ist.

Die Erfindung wird nachfolgend anhand verschiedener Ausführungsformen beschrieben, die in den beigefügten Zeichnungen dargestellt sind. In diesen zeigen:
- Figur 1 eine erfindungsgemäße Synchronisierungseinheit in einem schematischen Schnitt entlang der Ebene I-I von Figur 5, wobei zur Synchronisierung der in Figur 1 gezeigten linken Gangrades eine mehrflächige Synchronring-Baugruppe dargestellt ist und zur Synchronisation des rechten Gangrades ein Synchronring mit einer einzigen Reibfläche;
- Figur 2 die Synchronisierungseinheit von Figur 1 in einem Schnitt entlang der Ebene II-II von Figur 5;
- Figur 3 in einer Explosionsansicht die Synchronisierungseinheit von Figur 1;
- Figur 4 in einer Explosionsansicht die bei der Synchronisierungseinheit von Figur 1 verwendete Nabe mit zwei Federringen;
- Figur 5 eine Draufsicht auf die bei der Synchronisierungseinheit von Figur 1 verwendete Nabe mit daran angebrachten Federringen;
- Figur 6 die beiden Federringe von Figur 4 im aneinander montierten Zustand,
- Figur 7 in einer perspektivischen Ansicht einen der Federringe von Figur 4;
- Figur 8 eine Draufsicht auf die Nabe von Figur 4;
- Figur 9 eine perspektivische Ansicht der Nabe;
- Figur 10 in einer perspektivischen Ansicht die bei der Synchronisierungseinheit von Figur 1 verwendete Schiebemuffe mit den beiden daran angebrachten Federringen;
- Figur 11 in einer vergrößerten, perspektivischen Ansicht die Innenverzahnung der Schiebemuffe von Figur 10;
- Figur 12 in Schnittansicht entsprechend derjenigen von Figur 1 eine Synchronisierungseinheit gemäß einer ersten Ausführungsvariante;
- Figur 13 in einer perspektivischen Ansicht die bei der ersten Ausführungsvariante verwendete Synchron-Baugruppe;
- Figur 14 in einer Draufsicht die Synchronisierungseinheit von Figur 12 in einer Neutralstellung;
- Figur 15 in einer Draufsicht die Synchronisierungseinheit von Figur 12 in einer Vorsynchronstellung;
- Figur 16 in einer Draufsicht die Synchronisierungseinheit von Figur 12 in einer Sperrstellung;
- Figur 17 in eine perspektivischen Ansicht eine Synchro-Baugruppe für eine Synchronisierungseinheit gemäß einer zweiten Ausführungsvariante,
- Figur 18 in einer perspektivischen Explosionsansicht die Synchro-Baugruppe von Figur 17 zusammen mit der Nabe der Synchronisierungseinheit gemäß der zweiten Ausführungsvariante,
- Figur 19 in einer Draufsicht die Synchronisierungseinheit von Figur 18 in einer Neutralstellung,
- Figur 20 in einer Draufsiht die Synchronisierungseinehit von Figur 18 in einer Vorsynchronstellung;
- Figur 21 in einer abgebrochenen Schnittansicht eine Nabe mit daran angebrachten Federringen gemäß einer zweiten Ausführungsform;
- Figur 22 die Nabe mit den Federringen von Figur 21 in einer perspektivischen Ansicht; und
- Figur 23 in einer perspektivischen Ansicht die bei der zweiten Ausführungsform verwendeten Federringe.

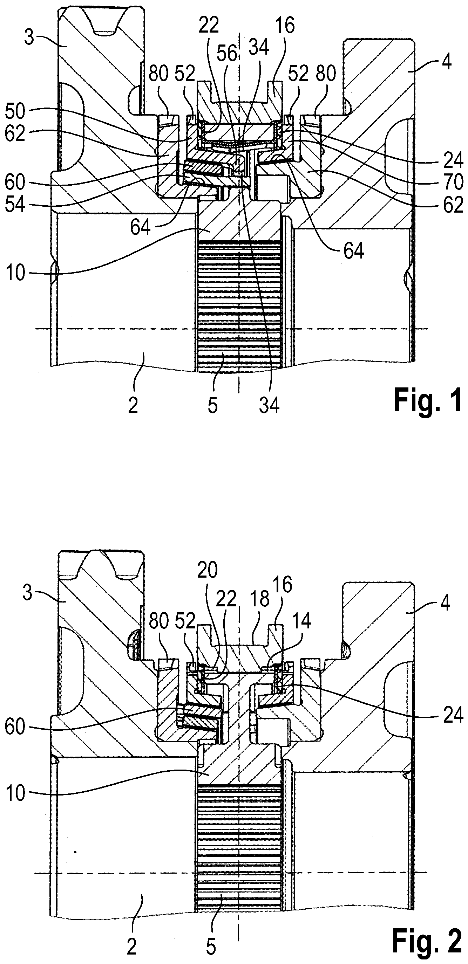

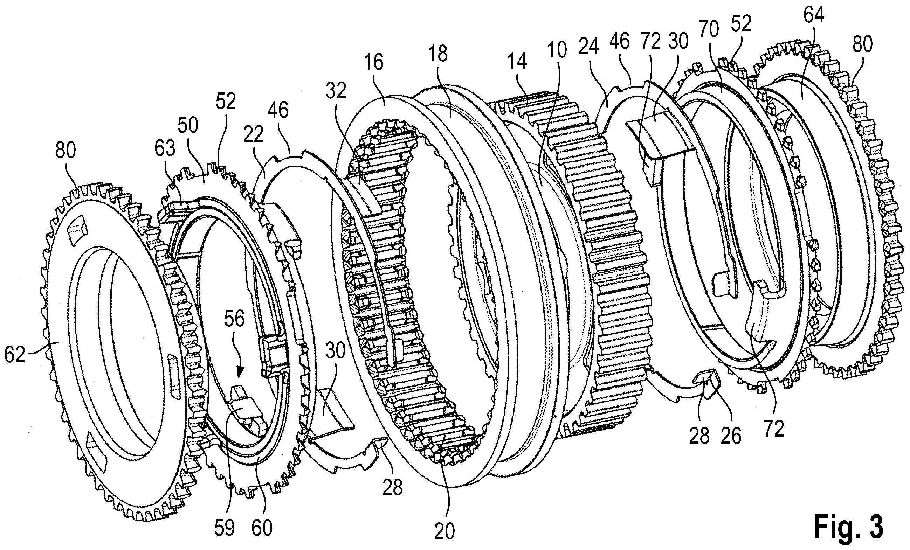

Anhand der Figuren 1 bis 11 wird nachfolgend eine erste Ausführungsform der Erfindung beschrieben.

In den Figuren 1 und 2 ist eine Getriebewelle 2 gezeigt, auf der zwei Gangräder 3, 4 als Losräder angeordnet sind. Diese können, um den entsprechenden Gang zu schalten, drehfest mit der Getriebewelle 2 verbunden werden. Die drehfeste Verbindung erfolgt über eine Nabe 10, die drehfest auf der Getriebewelle 2 angeordnet ist. Zu diesem Zweck ist die Getriebewelle 2 mit einer Getriebewellenverzahnung 5 versehen, auf der die Nabe 10 in Umfangsrichtung drehfest und axial fixiert montiert ist.

Auf ihrer Innenseite ist die Nabe 10 mit einer Nabenverzahnung 12 versehen, die in die Getriebewellenverzahnung 5 der Getriebewelle 2 eingreift. Auf ihrer Außenseite ist die Nabe 10 mit einer Außenverzahnung 14 versehen.

Die Außenverzahnung 14 ist in Umfangsrichtung durchgehend. "In Umfangsrichtung durchgehend" bedeutet hier, dass die Außenverzahnung 14 nicht zur Aufnahme von weiteren Bauteilen unterbrochen ist. Unschädlich ist in diesem Zusammenhang, wenn der eine oder andere Zahn möglicherweise mit anderer Geometrie ausgebildet ist oder vollständig wegfällt. Entscheidend im Hinblick auf die Fähigkeit, ein hohes Drehmoment übertragen zu können, ist die Tatsache, dass der die Außenverzahnung 14 tragende Materialring unterhalb des Fußkreisdurchmessers der Verzahnung durchgehend ist.

Auf der Außenverzahnung 14 der Nabe 10 ist eine Schiebemuffe 16 angeordnet, die auf ihrer Außenseite mit einer Schaltgabelnut 18 versehen ist. Die (hier nicht dargestellte) Schaltgabel ermöglicht es, die Schiebemuffe 16 in axialer Richtung zu verstellen, um den entsprechenden Gang zu schalten (bezogen auf die Figuren 1 und 2 also nach links, um den Gang mit dem Gangrad 3 einzulegen, und nach rechts, um den Gang mit dem Gangrad 4 einzulegen).

Die Schiebemuffe 16 ist auf ihrer Innenseite mit einer Innenverzahnung 20 oder Schiebemuffenverzahnung versehen, die an die Außenverzahnung 14 der Nabe 10 so angepasst ist, dass die Schiebemuffe 16 in Umfangsrichtung drehfest auf der Nabe 10 aufgenommen ist, jedoch in axialer Richtung relativ zu dieser verschoben werden kann.

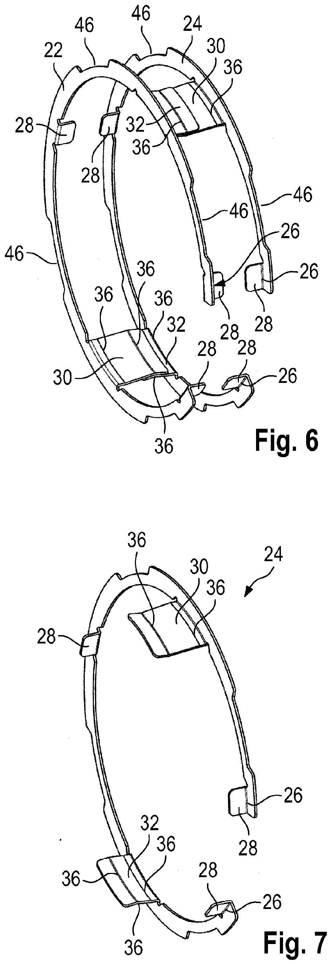

Beiderseits der Nabe 10 ist jeweils ein Federring 22, 24 angeordnet, der im Detail insbesondere anhand der Figuren 6 und 7 erläutert wird.

Jeder Federring 22, 24 besteht aus Blech, insbesondere aus Federblech. Es handelt sich um ausgestanzte Blechbiegeteile.

Dabei ist jeder Federring 22, 24 geschlitzt ausgeführt, also in Umfangsrichtung unterbrochen.

Jeder Federring weist mehrere Führungsabsätze 26 auf, mit denen er in axialer Richtung und in Umfangsrichtung an der Nabe 10 geführt ist. Im Ausführungsbeispiel der Figuren 6 und 7 ist jeder Federring 22, 24 mit mehreren sich im Wesentlichen axial erstreckenden Führungslaschen 28 versehen, die zusammen mit dem Übergang zum eigentlichen Federring jeweils den Führungsabsatz 26 bilden.

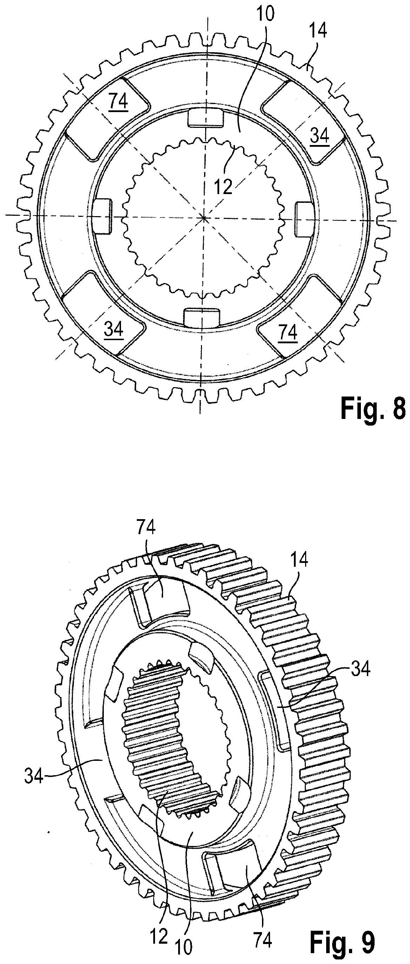

Jeder Federring 22, 24 ist außerdem mit mehreren sich im Wesentlichen axial erstreckenden Federlaschen 30, 32 versehen. Diese erstrecken sich durch Ausnehmungen 34 in der Nabe 10 hindurch (siehe auch die Figuren 8 und 9) und rasten ineinander ein.

Jeder Federring 22, 24 ist dabei mit einer längeren Federlasche 30 und einer kürzeren Federlasche 32 versehen, die einander gegenüberliegend angeordnet sind. Jede Federlasche ist dabei geringfügig radial so abgebogen bzw. abgeknickt (siehe die Biegekanten 36), so dass die Federlaschen 30, 32 aneinander elastisch einrasten, wenn die Federringe 22, 24 an der Nabe 10 montiert werden.

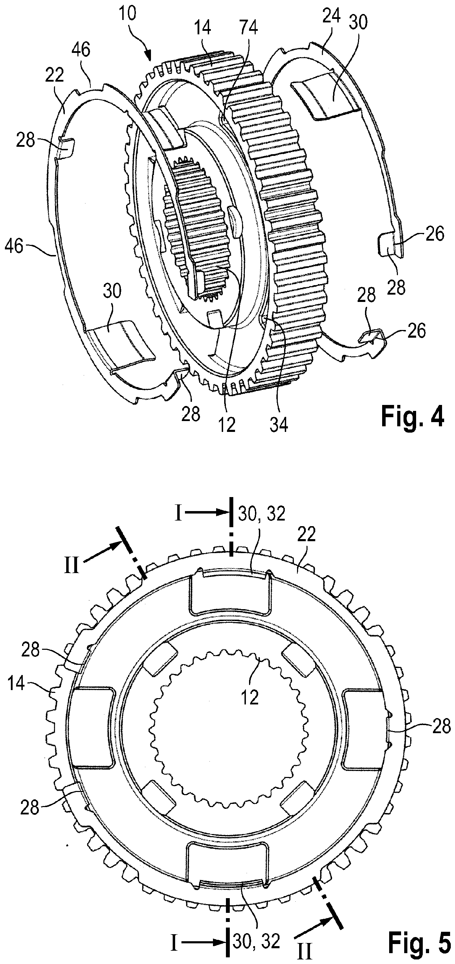

Wie insbesondere in Figur 5 zu sehen ist, ist der Außendurchmesser der Federringe 22, 24 so gewählt, dass der maximale Durchmesser der Federringe 22, 24 im montierten Zustand zwischen dem Fußkreisdurchmesser und dem Kopfkreisdurchmesser der Außenverzahnung 14 der Nabe 10 liegt.

Aufgrund des Außendurchmessers der Federringe 22, 24 liegen diese einer Stirnseite der Schiebemuffe gegenüber. Konkret ist diese Stirnseite der Schiebemuffe gebildet durch eine Vielzahl von Vorsynchronfasen 40, die auf voneinander abgewandten, außenliegenden Seiten der einzelnen Zähne 42 der Innenverzahnung 20 der Schiebemuffe 16 gebildet sind. Die Vorsynchronfasen 40 sind dabei, bezogen auf eine radiale Ebene, schräg ausgerichtet, sodass das radial weiter innen liegende Ende der Vorsynchronfasen näher an einer Mittelebene der Schiebemuffe 16 liegt als das radial außen liegende Ende.

Die Federringe 22, 24 liegen somit im montierten Zustand innerhalb der Schiebemuffe 16 (also näher an deren Mittelebene als die Abschnitte der Schiebemuffe, die ihre Länge in axialer Richtung definieren) und außerdem an den axialen Stirnseiten des Nabe 10 (dies ist insbesondere in den Figuren 1 und 2 zu sehen).

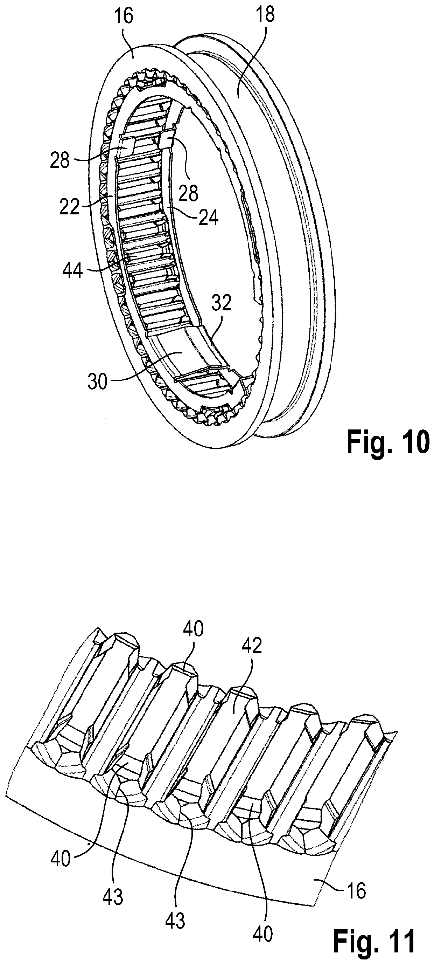

Die Schiebemuffe 16 ist außerdem mit mehreren Anschlagzähnen 44 versehen (siehe insbesondere Figur 10), in deren Bereich jeder der Federringe 22, 24 mit einer Aussparung 46 im Außenbereich versehen ist. Hierdurch ergibt sich eine Freigängigkeit zu den Anschlagzähnen 44. Die Anschlagzähne 44 dienen dabei dazu, den maximalen axialen Schaltweg der Schiebemuffe 16 zu begrenzen.

Zur Synchronisierung des Gangrades ist hier eine mehrteilige Synchron-Baugruppe vorgesehen. Diese weist den eigentlichen Synchronring 50 auf, der außenseitig mit mehreren Sperrzähnen 52 versehen ist, sowie einen Zusatzsynchronring 54. Diese sind beide in Umfangsrichtung drehfest mit der Nabe 10 gekoppelt, da sie mit mehreren Indexnocken 56 in Ausnehmungen 34 eingreifen, die in der Nabe 10 vorgesehen sind (siehe auch Figur 1). Innerhalb des Indexnockens 56 ist eine Ausnehmen 57 vorgesehen, in die ein Koppelfortsatz 59 eingreift, der am Zusatzsynchronring 54 angebracht ist.

Die Ausnehmungen 57 sind hier als einseitig offene Aussparungen ausgeführt.

Zwischen dem Synchronring 50 und dem Zusatzsynchronring 54 ist ein Reibring 60 angeordnet, der drehfest mit einem Koppelring 62 verbunden ist (siehe die Indexnocken 63). Der Koppelring 62 ist drehfest mit dem Gangrad 3 verbunden und weist eine Reibfläche 64 auf. Auf diese Weise ist eine an sich bekannte Mehrflächen-Synchronisierungsbaugruppe gebildet.

Auf der Seite des Gangrades 4 ist ein einziger Synchronring 70 angeordnet, der außenseitig ebenfalls mit Sperrzähnen 52 versehen ist. Innenseitig wirkt der Synchronring 70 mit einer Reibfläche 64 zusammen, die an einem Koppelring 62 vorgesehen ist, der drehfest mit dem Gangrad 4 verbunden ist.

Der Synchronring 70 ist ebenfalls drehfest mit der Nabe 10 gekoppelt. Hierfür sind am Synchronring zwei Indexnocken 72 vorgesehen. Diese erstrecken sich durch zwei einander diametral gegenüberliegende Ausnehmungen 74 in der Nabe 10.

Da die Indexnocken 56, 72 der Synchronringe 50, 54 bzw. 70 radial innenliegend angeordnet sind, gibt es keinerlei Notwendigkeit einer Schwächung oder Unterbrechung der Nabe 10 im Bereich der Außenverzahnung 40.

Wenn sich die Schiebemuffe 16 in der Neutralstellung befindet (siehe die Figuren 1 und 2), also keiner der beiden Gänge geschaltet ist, wird sie durch Anlage der Vorsynchronfasen 40 an den Federringen 22, 24 in einer Mittelstellung gehalten. In dieser sind die Synchronringe auf den beiden Seiten der Nabe 10 gelüftet.

Wenn einer der Gänge geschaltet werden soll (beispielsweise der mit dem Gangrad 4), wird die Schiebemuffe 16 ausgehend von ihrer in den Figuren 1 und 2 gezeigten Stellung in axialer Richtung verschoben, also in diesem Beispiel nach rechts. Dabei nimmt zuerst die Schiebemuffe 16 über die Vorsynchronfasen 40 den Federring 24 in axialer Richtung mit. Er wirkt dabei als Vorsynchronelement und beaufschlagt den Synchronring 70 in axialer Richtung, bis es zum Reibeingriff an der Reibfläche 64 kommt. Der Federring 24 kann dieser Bewegung folgen, da seine Federlaschen 30, 32 auf den Federlaschen 32, 30 des Federrings 22 gleiten.

Durch das Reibmoment an der Reibfläche 64 wird der Synchronring 70 in an sich bekannter Weise relativ zur Nabe 10 verdreht, sodass seine Sperrzähne 52 ein vorzeitiges Durchschalten der Schiebemuffe 16 verhindern. Erst wenn die Drehzahl des Gangrades 4 ausreichend an die Drehzahl des Getriebewelle 2 angenähert ist und der Synchronring 70 (nahezu) kein Reibmoment mehr übertragen muss, können die Zahnspitzen 43 der Zähne 42 der Innenverzahnung 20 die Sperrzähne 52 des Synchronrings in Umfangsrichtung verdrehen, sodass die Schiebemuffe 16 so weit in axialer Richtung durchgeschaltet werden kann, dass sie mit einer Koppelverzahnung 80 der Koppelringe 62 in Eingriff gelangt.

Beim Durchschalten können die Federringe (im beschriebenen Beispiel der Federring 24) der axialen Bewegung der Schiebemuffe 16 nicht mehr folgen, da sie vom entsprechenden Synchronring gehalten werden. Die Vorsynchronfasen 40 bewirken dann aufgrund ihrer schrägen Ausrichtung, dass der Federring radial nach innen bewegt wird, sodass er die weitere Bewegung der Schiebemuffe 16 nicht verhindert. Der Federring liegt dann mit seinem Außenumfang an den Kopfflächen der Zähne 42 der Innenverzahnung 20 an.

Wenn der Gang wieder ausgelegt werden soll, nimmt die Schiebemuffe, aufgrund der Reibung zwischen dem Außenumfang des entsprechenden Federrings und der Kopffläche der Zähne 42 der Innenverzahnung 20, den entsprechenden Federring in axialer Richtung zur Nabe 10 hin mit, bis der Federring wieder an der Nabe anliegt. Sobald die Schiebemuffe ausreichend weit geschaltet ist, gleitet der Federring über die Vorsynchronfasen 40 nach außen, sodass der Federring wieder seine ursprüngliche, aufgeweitete Form hat. Die Schiebemuffe 16 ist jetzt wieder in ihrer Neutralstellung fixiert.

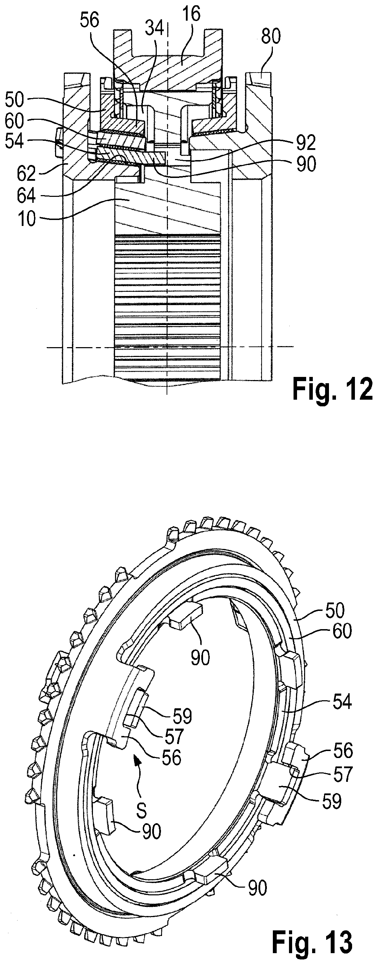

In den Figuren 12 bis 16 eine erste Ausführungsvariante dargestellt. Für die von der ersten Ausführungsform bekannten Bauteile werden dieselben Bezugszeichen verwendet, und es wird insoweit auf die obigen Erläuterungen verwiesen.

In gleicher Weise wie bei der in den Figuren 1 bis 11 gezeigten Ausführungsform wird bei der ersten Ausführungsvariante eine mehrteilige Synchron-Baugruppe mit einem Synchronring 50 und einem Zusatzsynchronring 54 verwendet. Zwischen diesen ist der Reibring 60 angeordnet.

Der Unterschied zwischen der in den Figuren 1 bis 11 gezeigten Ausführungsform und der Ausführungsvariante gemäß den Figuren 12 bis 16 besteht darin, dass bei der Ausführungsvariante am Zusatzsynchronring 54 mehrere Koppelnocken 90 vorgesehen sind. Dementsprechend sind an der Nabe 10 mehrere Taschen 92 vorgesehen, in die die Koppelnocken 90 so eingreifen, dass ein Drehmoment zwischen der Nabe 10 und dem Zusatzsynchronring 54 übertragen werden kann.

Im gezeigten Ausführungsbeispiel werden vier Koppelnocken 90 und dementsprechend vier Taschen 92 in der Nabe 10 verwendet.

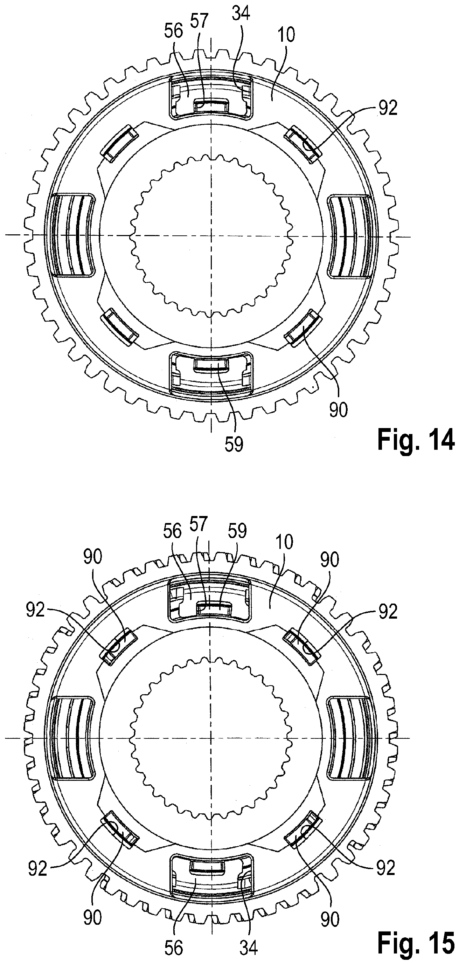

In der Neutralstellung, also wenn sich die Schiebemuffe 16 in ihrer Mittelstellung befindet (siehe Figur 12), befindet sich die Synchron-Baugruppe mit dem Synchronring 50 und dem Zusatzsynchronring 54 in der in Figur 14 gezeigten Stellung, in der die Koppelnocken 90 etwa mittig in den Taschen 92 angeordnet sind und sich die Indexnocken 56 etwa mittig in den Ausnehmungen 34 befinden.

Wenn der entsprechende Gang geschaltet werden soll, wird die Synchron-Baugruppe in axialer Richtung verschoben, sodass es zum Reibeingriff mit der Reibfläche 64 kommt. Dadurch verdreht sich zunächst der Zusatzsynchronring 54, bis die Koppelnocken 90 an einem Rand der entsprechenden Tasche 92 anliegen (siehe Figur 15). In diesem Zustand wird allerdings kein Drehmoment vom Zusatzsynchronring 54 in den Synchronring 50 eingeleitet, da im Bereich der Indexnocken 56 ein geringfügiges Spiel S (siehe Figur 13) vorhanden ist. Dies ist auch in Figur 15 zu erkennen; der Koppelfortsatz 59 befindet sich mittig in der ihm zugeordneten Ausnehmung 57 des Indexnockens 56.

Hieraus folgt, dass das vom Koppelring 62 über die Reibfläche 64 auf den Zusatzsynchronring 54 übertragene Drehmoment direkt über die Koppelnocken 90 und die Taschen 92 in die Nabe 10 übertragen wird.

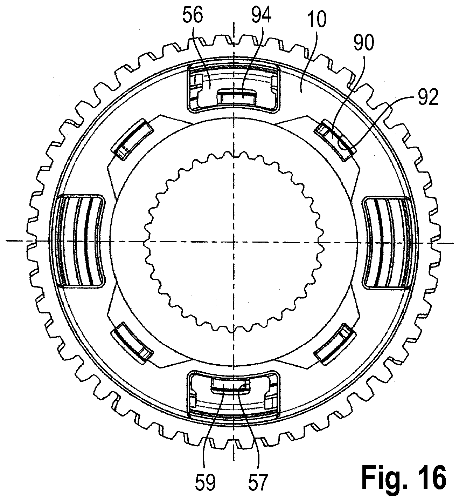

Sobald die Schiebemuffe 16 an den Sperrzähnen 52 des Synchronrings 50 anliegt, wird der Synchronring in seine Sperrstellung verdreht (siehe Figur 16), in der die Koppelfortsätze 59 am Rand der entsprechenden Ausnehmung 57 der Indexnocken 56 anliegen. In diesem Zustand überträgt der Synchronring 50 einen Teil des Reibmoments zwischen der Nabe 10 und dem Koppelring 62.

Ausgehend von diesem Zustand erfolgen die weitere Synchronisierung und das Durchschalten in derselben Weise wie bei der in den Figuren 1 bis 11 gezeigten Ausführungsform.

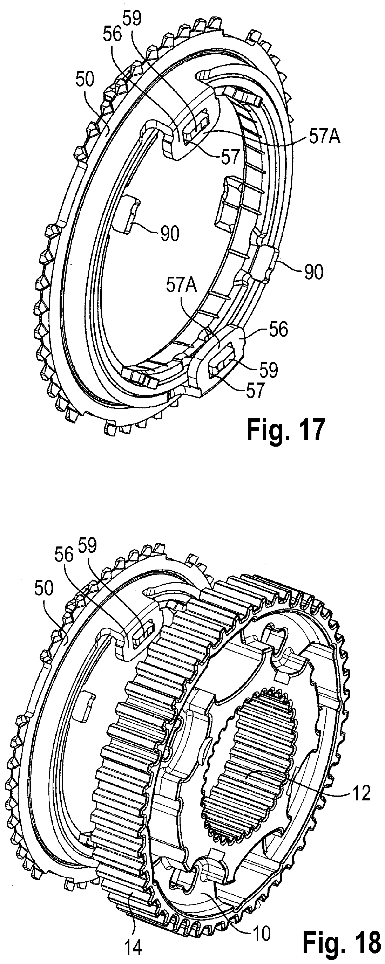

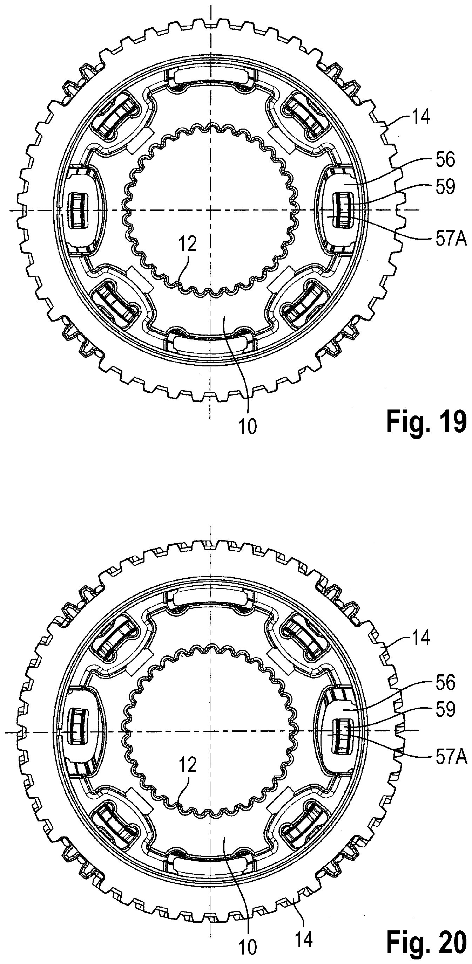

In den Figuren 17 bis 20 ist eine zweite Ausführungsvariante gezeigt. Für die von der ersten Ausführungsform und der ersten Ausführungsvariante bekannten Bauteile werden dieselben Bezugszeichen verwendet, und es wird insoweit auf die obigen Erläuterungen verwiesen.

In gleicher Weise wie bei der ersten Ausführungsvariante und der ersten Ausführungsform wird bei der in den Figuren 17 bis 20 gezeigten Ausführungsvariante eine mehrteilige Synchron-Baugruppe mit einem Synchronring 50 und einem Zusatzsynchronring 54 verwendet. Zwischen diesen ist der Reibring 60 angeordnet.

Der Unterschied zwischen der in den Figuren 12 bis 16 gezeigten ersten Ausführungsvariante und der in den Figuren 17 bis 20 gezeigten zweiten Ausführungsvariante besteht darin, dass bei der zweiten Ausführungsvariante die Ausnehmungen 57, die in jedem Indexnocken 56 vorgesehen sind, nicht als einseitig offene Aussparungen ausgeführt sind, sondern als geschlossene Taschen, in die der entsprechende Indexnocken 56 eingreift.

Die geschlossene, taschenartige Kontur der Ausnehmungen 57 wird erhalten durch einen Steg 57A, der jede Ausnehmung 57 an der radial innenliegenden Seite abschließt. Hierdurch wird eine höhere Festigkeit erzielt.

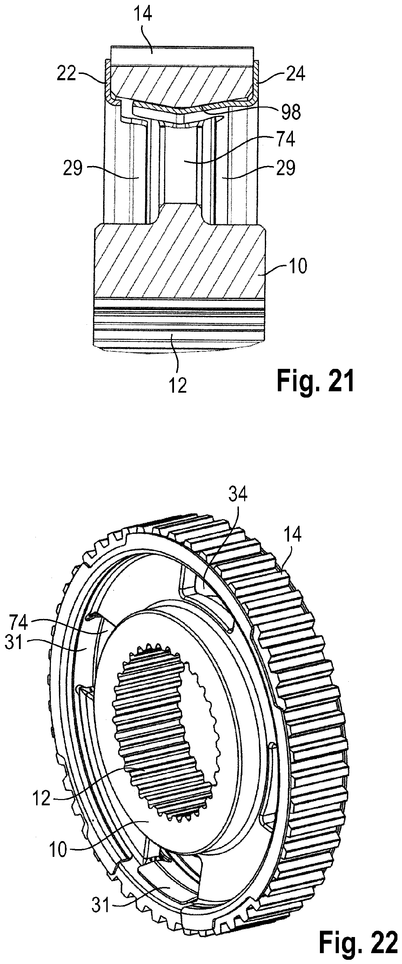

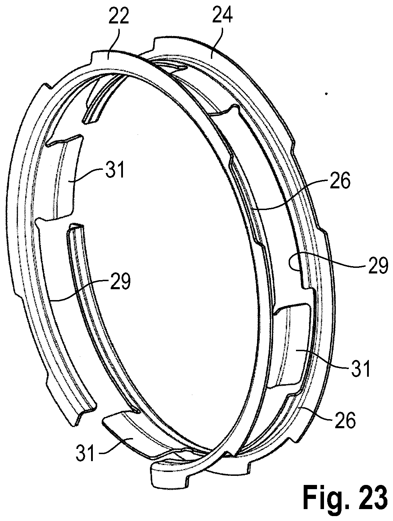

In den Figuren 21 bis 23 ist eine zweite Ausführungsform dargestellt. Der wesentliche Unterschied zur ersten Ausführungsform besteht hier darin, dass die beiden Federringe 22, 24 im montierten Zustand nicht aneinander angreifen, sondern dass jeder Federring 22, 24 unabhängig vom anderen Federring 24, 22 an der Nabe 10 montiert ist. Zu diesem Zweck weist jeder Federring 22, 24 zwei Federlaschen 31 auf, die, im Querschnitt betrachtet, die Form eines sehr flachen V haben (siehe insbesondere Figur 13). Die konkave Innenseite dieses "V" liegt an einer Federringhaltefläche 90 an, die auf der radial außenliegenden Seite der Ausnehmung 34 liegt, die auf der radial außenliegenden Seite der Ausnehmungen 74 der Nabe 10 ausgebildet ist.

Wenn die Schiebemuffe 16 ausgehend von der Neutralstellung erstellt und dabei der Federring 22, 24 in axialer Richtung mitgenommen wird, gleiten die Federlaschen 31 des entsprechenden Federrings 22, 24 auf der Federringhaltefläche 98, wobei die Federlaschen 31 dabei elastisch radial nach innen bewegt werden. Hierdurch entsteht eine Vorspannung, die das Rückkehren der Federringe 22, 24 beim Auslegen des entsprechenden Ganges in die in Figur 13 gezeigte Ausgangsstellung unterstützt.

Ein weiterer Unterschied zwischen der ersten und der zweiten Ausführungsform besteht darin, dass bei der zweiten Ausführungsform der Absatz 26, mit dem die Federringe in axialer Richtung und in Umfangsrichtung an der Nabe 10 fixiert sind, hier durch einen umlaufenden Führungsbund 29 gebildet ist.

## Patentansprüche

1. Synchronisierungseinheit für ein Schaltgetriebe, insbesondere eines Kraftfahrzeugs, mit einer Nabe (10), die drehfest mit einer Getriebewelle (2) verbunden werden kann und eine umfangsmäßig durchgängige Außenverzahnung (14) aufweist, einer Schiebemuffe (16), die auf der Außenverzahnung (14) der Nabe (10) in axialer Richtung verschiebbar, aber in Umfangsrichtung drehfest gekoppelt aufgenommen ist, mindestens einem Synchronring (50, 54; 70), der eine vorzugsweise konusförmige Reibfläche zur Reibkopplung des Synchronrings mit einem Gangrad (3, 4) des Schaltgetriebes aufweist und von der Schiebemuffe (16) betätigbar ist, und einem Federring (22, 24), der an einer axialen Seite der Außenverzahnung (14) der Nabe (10) angeordnet und dazu eingerichtet ist, die Schiebemuffe (16) in einer Neutralstellung zu arretieren, wobei der Federring (22, 24) an einer Stirnseite (40) der Schiebemuffe (16) anliegt und wirkungsmäßig zwischen der Schiebemuffe (16) und dem Synchronring (50, 54; 70) angeordnet ist.

2. Synchronisierungseinheit nach Anspruch 1, **dadurch gekennzeichnet, dass** der Federring (22, 24) ein umgeformter Blechring ist.

3. Synchronisierungseinheit nach Anspruch 1 oder 2, **dadurch gekennzeichnet, dass** der Federring (22, 24) umfangsmäßig unterbrochen ist.

4. Synchronisierungseinheit nach einem der vorhergehenden Ansprüche, **dadurch gekennzeichnet, dass** der Federring (22, 24) in der Neutralstellung der Schiebemuffe (16) an einer Innenverzahnung (20) der Schiebemuffe (16) anliegt, vorzugsweise an einer Vorsynchronfase (40) der Innenverzahnung (20).

5. Synchronisierungseinheit nach Anspruch 4, **dadurch gekennzeichnet, dass** die Innenverzahnung (20) der Schiebemuffe (16) umfangsmäßig durchgängig ist.

6. Synchronisierungseinheit nach einem der vorhergehenden Ansprüche, **dadurch gekennzeichnet, dass** der Federring (22, 24) als Vorsynchronelement dient.

7. Synchronisierungseinheit nach einem der vorhergehenden Ansprüche, **dadurch gekennzeichnet, dass** der Federring (22, 24) mindestens einen Führungsabsatz (26) aufweist, mittels dem er in axialer Richtung und in Umfangsrichtung an der Nabe (10) geführt ist.

8. Synchronisierungseinheit nach Anspruch 7, **dadurch gekennzeichnet, dass** der Führungsabsatz (26) durch einen umlaufenden, umgeformten Führungsbund (29) gebildet ist.

9. Synchronisierungseinheit nach Anspruch 7, **dadurch gekennzeichnet, dass** der Führungsabsatz (26) mehrere sich im Wesentlichen axial erstreckende Führungslaschen (28) aufweist.

10. Synchronisierungseinheit nach einem der vorhergehenden Ansprüche, **dadurch gekennzeichnet, dass** der Federring (22, 24) zwei oder mehr sich im Wesentlichen axial erstreckende Federlaschen (30, 32; 31) umfasst, die in eine in der Nabe (10) vorgesehene Ausnehmung eingreifen.

11. Synchronisierungseinheit nach Anspruch 10, **dadurch gekennzeichnet, dass** die Federlasche (30, 32; 31) einen radial nach außen geknickten oder gebogenen Abschnitt umfasst.

12. Synchronisierungseinheit nach Anspruch 10 oder 11, **dadurch gekennzeichnet, dass** die Federlasche (31) in der Neutralstellung an einer Federringhaltefläche (98) der Nabe (10) anliegt, wobei die Federringhaltefläche (98) vorzugsweise an einer radial außenliegenden Seitenfläche der Ausnehmung (34, 74) angeordnet ist und/oder vorzugsweise bezüglich einer Axialebene der Nabe (10) schräg verläuft.

13. Synchronisierungseinheit nach Anspruch 12, **dadurch gekennzeichnet, dass** die Federringhaltefläche (98) in axialer Richtung von der Federlasche (31) hintergriffen ist.

14. Synchronisierungseinheit nach einem der vorhergehenden Ansprüche, **dadurch gekennzeichnet, dass** zwei Federringe (22, 24) vorgesehen sind, die auf einander axial entgegengesetzten Seiten der Nabe (10) angeordnet sind.

15. Synchronisierungseinheit nach Anspruch 14, **dadurch gekennzeichnet, dass** sich die zwei Federringe (22, 24) nicht berühren.

16. Synchronisierungseinheit nach Anspruch 14, **dadurch gekennzeichnet, dass** die Federlaschen der auf einander axial entgegengesetzten Seiten der Nabe (10) angeordneten zwei Federringe (22, 24) paarweise radial aneinander anliegen.

17. Synchronisierungseinheit nach Anspruch 16, **dadurch gekennzeichnet, dass** sich die paarweise aneinander anliegenden Federringe (22, 24) in axialer Richtung hintergreifen.

18. Synchronisierungseinheit nach einem der vorhergehenden Ansprüche, **dadurch gekennzeichnet, dass** der Synchronring mit Indexnocken (56, 72) versehen ist, die radial innerhalb der Außenkontur angeordnet sind.

19. Synchronisationseinheit nach Anspruch 18, **dadurch gekennzeichnet, dass** die Nabe (10) mindestens eine weitere Ausnehmung (74) zur Aufnahme der Indexnocken aufweist.

20. Synchronisationseinheit nach einem der vorhergehenden Ansprüche, **dadurch gekennzeichnet, dass** eine Synchron-Baugruppe mit einem Synchronring (50) und einen Zusatzsynchronring (54) vorgesehen ist, wobei der Synchronring mit mindestens einem Indexnocken (56) versehen ist, der eine Ausnehmung (57) aufweist, in der ein Koppelfortsatz (59) aufgenommen ist, der am Zusatzsynchronring (54) angebracht ist.

21. Synchronisationseinheit nach Anspruch 20, **dadurch gekennzeichnet, dass** der Zusatzsynchronring (54) mit mindestens einem Koppelnocken (90) versehen ist, der in eine Tasche (92) eingreift, die an der Nabe (10) vorgesehen ist.

22. Synchronisationseinheit nach Anspruch 20 oder Anspruch 21, **dadurch gekennzeichnet, dass** die Ausnehmung als geschlossene Tasche ausgeführt ist.

23. Schaltgetriebe für ein Fahrzeug mit mindestens einer Synchronisierungseinheit (10, 16, 22, 24) nach einem der vorhergehenden Ansprüche.

## Claims

1. A synchronizer unit for a manual transmission, in particular of a motor vehicle, comprising a hub (10) which is adapted to be connected to a gear shaft (2) for joint rotation therewith and includes a circumferentially continuous external toothing (14), a sliding sleeve (16) which is received on the external toothing (14) of the hub (10) for displacement in the axial direction, but so as to be coupled to prevent relative rotation in the circumferential direction, at least one synchronizer ring (50, 54; 70) which includes a preferably cone-shaped friction surface for friction coupling of the synchronizer ring to a speed change gear (3, 4) of the manual transmission and is adapted to be actuated by the sliding sleeve (16), and a spring ring (22, 24) which is arranged at an axial side of the external toothing (14) of the hub (10) and is configured to lock the sliding sleeve (16) in a neutral position, wherein the spring ring (22, 24) rests against a face side (40) of the sliding sleeve (16) and is operatively arranged between the sliding sleeve (16) and the synchronizer ring (50, 54; 70).

2. The synchronizer unit according to claim 1, **characterized in that** the spring ring (22, 24) is a reshaped sheet metal ring.

3. The synchronizer unit according to claim 1 or 2, **characterized in that** the spring ring (22, 24) is circumferentially interrupted.

4. The synchronizer unit according to any of the preceding claims, **characterized in that** in the neutral position of the sliding sleeve (16), the spring ring (22, 24) rests against an internal toothing (20) of the sliding sleeve (16), preferably against a pre-synchronizer chamfer (40) of the internal toothing (20).

5. The synchronizer unit according to claim 4, **characterized in that** the internal toothing (20) of the sliding sleeve (16) is circumferentially continuous.

6. The synchronizer unit according to any of the preceding claims, **characterized in that** the spring ring (22, 24) serves as a pre-synchronizer element.

7. The synchronizer unit according to any of the preceding claims, **characterized in that** the spring ring (22, 24) includes at least one guide step (26) by means of which it is guided at the hub (10) in the axial direction and in the circumferential direction.

8. The synchronizer unit according to claim 7, **characterized in that** the guide step (26) is formed by a circumferential, reshaped guide collar (29).

9. The synchronizer unit according to claim 7, **characterized in that** the guide step (26) includes a plurality of substantially axially extending guide tabs (28).

10. The synchronizer unit according to any of the preceding claims, **characterized in that** the spring ring (22, 24) comprises two or more substantially axially extending spring shackles (30, 32; 31) which each engage in a recess provided in the hub (10).

11. The synchronizer unit according to claim 10, **characterized in that** the spring shackle (30, 32; 31) comprises a portion that is bent or angled radially outwards.

12. The synchronizer unit according to claim 10 or 11, **characterized in that** in the neutral position, the spring shackle (31) rests against a spring ring holding surface (98) of the hub (10), the spring ring holding surface (98) preferably being arranged on a radially external side face of the recess (34, 74) and/or preferably extending at an angle in relation to an axial plane of the hub (10).

13. The synchronizer unit according to claim 12, **characterized in that** the spring shackle (31) engages behind the spring ring holding surface (98) in the axial direction.

14. The synchronizer unit according to any of the preceding claims, **characterized in that** two spring rings (22, 24) are provided which are arranged on axially opposite sides of the hub (10).

15. The synchronizer unit according to claim 14, **characterized in that** the two spring rings (22, 24) do not contact each other.

16. The synchronizer unit according to claim 14, **characterized in that** the spring shackles of the two spring rings (22, 24) arranged on axially opposite sides of the hub (10) radially rest against each other in pairs.

17. The synchronizer unit according to claim 16, **characterized in that** the spring rings (22, 24) resting against each other in pairs engage behind each other in the axial direction.

18. The synchronizer unit according to any of the preceding claims, **characterized in that** the synchronizer ring is provided with index cams (56, 72) which are arranged radially within the outer contour.

19. The synchronizer unit according to claim 18, **characterized in that** the hub (10) has at least one further recess (74) for receiving the index cams.

20. The synchronizer unit according to any of the preceding claims, **characterized in that** a synchronizer assembly having a synchronizer ring (50) and an additional synchronizer ring (54) is provided, the synchronizer ring being provided with at least one index cam (56) which has a recess (57) having a coupling extension (59) received therein which is mounted to the additional synchronizer ring (54).

21. The synchronizer unit according to claim 20, **characterized in that** the additional synchronizer ring (54) is provided with at least one coupling cam (90) which engages in a pocket (92) provided at the hub (10).

22. The synchronizer unit according to claim 20 or claim 21, **characterized in that** the recess is configured as a closed pocket.

23. A manual transmission for a vehicle comprising at least one synchronizer unit (10, 16, 22, 24) according to any of the preceding claims.

## Revendications

1. Unité de synchronisation pour boîte de vitesses, en particulier d'un véhicule automobile, comprenant un moyeu (10) qui est apte à être relié solidaire en rotation à un arbre (2) de boîte de vitesses et qui présente une denture extérieure (14) continue sur la périphérie, un baladeur (16) qui est reçu sur la denture extérieure (14) du moyeu (10) de manière déplaçable dans le sens axial mais de manière couplée solidaire en rotation dans le sens périphérique, au moins un anneau de synchronisation (50, 54 ; 70) qui présente une surface de friction de préférence conique pour un couplage par friction de l'anneau de synchronisation avec un pignon de vitesse (3, 4) de la boîte de vitesses et qui est apte à être actionné par le baladeur (16), et une rondelle-ressort (22, 24) qui est agencée d'un côté axial de la denture extérieure (14) du moyeu (10) et qui est aménagée de manière à arrêter le baladeur (16) dans une position neutre, la rondelle-ressort (22, 24) reposant sur une face frontale (40) du baladeur (16) et étant agencée de manière fonctionnelle entre le baladeur (16) et l'anneau de synchronisation (50, 54 ; 70).

2. Unité de synchronisation selon la revendication 1, **caractérisée en ce que** la rondelle-ressort (22, 24) est un anneau en tôle reformé.

3. Unité de synchronisation selon la revendication 1 ou 2, **caractérisée en ce que** la rondelle-ressort (22, 24) est interrompue sur la périphérie.

4. Unité de synchronisation selon l'une des revendications précédentes, **caractérisée en ce que** la rondelle-ressort (22, 24), dans la position neutre du baladeur (16), repose sur une denture intérieure (20) du baladeur (16), de préférence sur un chanfrein de pré-synchronisation (40) de la denture intérieure (20).

5. Unité de synchronisation selon la revendication 4, **caractérisée en ce que** la denture intérieure (10) du baladeur (16) est continue sur la périphérie.

6. Unité de synchronisation selon l'une des revendications précédentes, **caractérisée en ce que** la rondelle-ressort (22, 24) sert d'élément de pré-synchronisation.

7. Unité de synchronisation selon l'une des revendications précédentes, **caractérisée en ce que** la rondelle-ressort (22, 24) présente au moins un talon de guidage (26) au moyen duquel elle est guidée le long du moyeu (10) dans le sens axial et dans le sens périphérique.

8. Unité de synchronisation selon la revendication 7, **caractérisée en ce que** le talon de guidage (26) est formé par un collier de guidage (29) reformé et circonférentiel.

9. Unité de synchronisation selon la revendication 7, **caractérisée en ce que** le talon de guidage (26) présente plusieurs pattes de guidage (28) qui s'étendent de manière sensiblement axiale.

10. Unité de synchronisation selon l'une des revendications précédentes, **caractérisée en ce que** la rondelle-ressort (22, 24) comprend deux pattes à ressort (30, 32 ; 31) ou plus qui s'étendent de manière sensiblement axiale et qui s'engagent dans un évidement prévu dans le moyeu (10).

11. Unité de synchronisation selon la revendication 10, **caractérisée en ce que** la patte à ressort (30, 32 ; 31) comprend un tronçon plié ou recourbé radialement vers l'extérieur.

12. Unité de synchronisation selon la revendication 10 ou 11, **caractérisée en ce que** la patte à ressort (31), dans la position neutre, repose sur une face de retenue de rondelle-ressort (98) du moyeu (10), la face de retenue de rondelle-ressort (98) étant de préférence agencée sur une face latérale radialement extérieure de l'évidement (34, 74) et/ou s'étendant de préférence en oblique par rapport à un plan axial du moyeu (10).

13. Unité de synchronisation selon la revendication 12, **caractérisée en ce que** la patte à ressort (31) s'engage derrière la face de retenue de rondelle-ressort (98) dans le sens axial.

14. Unité de synchronisation selon l'une des revendications précédentes, **caractérisée en ce qu'**il est prévu deux rondelles-ressort (22, 24) qui sont agencées sur des faces axialement opposées l'une à l'autre du moyeu (10).

15. Unité de synchronisation selon la revendication 14, **caractérisée en ce que** les deux rondelles-ressort (22, 24) ne se touchent pas.

16. Unité de synchronisation selon la revendication 14, **caractérisée en ce que** les pattes à ressort des deux rondelles-ressort (22, 24) agencées sur des faces axialement opposées l'une à l'autre du moyeu (10) reposent par paires radialement les unes contre les autres.

17. Unité de synchronisation selon la revendication 16, **caractérisée en ce que** les rondelles-ressort (22, 24) reposant par paires les unes contre les autres s'engagent les unes derrière les autres dans le sens axial.

18. Unité de synchronisation selon l'une des revendications précédentes, **caractérisée en ce que** l'anneau de synchronisation est pourvu de cames d'indexage (56, 72) agencées radialement à l'intérieur du contour extérieur.

19. Unité de synchronisation selon la revendication 18, **caractérisée en ce que** le moyeu (10) présente au moins un évidement additionnel (74) pour recevoir la came d'indexage.

20. Unité de synchronisation selon l'une des revendications précédentes, **caractérisée en ce qu'**il est prévu un ensemble de synchronisation qui présente un anneau de synchronisation (50) et un anneau de synchronisation supplémentaire (54), l'anneau de synchronisation étant pourvu d'au moins une came d'indexage (56) qui présente un évidement (57) dans lequel est reçu une saillie de couplage (59) agencée sur l'anneau de synchronisation supplémentaire (54).

21. Unité de synchronisation selon la revendication 20, **caractérisée en ce que** l'anneau de synchronisation supplémentaire (54) est pourvu d'au moins une came de couplage (90) qui s'engage dans une poche (92) prévue sur le moyeu (10).

22. Unité de synchronisation selon la revendication 20 ou la revendication 21, **caractérisée en ce que** l'évidement est réalisé sous forme de poche fermée.

23. Boîte de vitesses pour véhicule, comprenant au moins une unité de synchronisation (10, 16, 22, 24) selon l'une des revendications précédentes.
